# EUROPÄISCHE PATENTSCHRIFT

(11) **EP 0 698 512 B1**
(45) Veröffentlichungstag und Bekanntmachung des Hinweises auf die Patenterteilung: **29.04.1998**
(21) Anmeldenummer: 95109893.8
(22) Anmeldetag: 24.06.1995
(51) Int. Cl.: B60C 11/04, B60C 11/03, B60C 11/12

(54) **Reifen mit profilierter Lauffläche mit S-förmigen Querrillen**
Tyre with a tread profile including S-shaped transverse grooves
Bandage pneumatique comportant un profil de bande de roulement pourvu de rainures transversales en forme de S

(30) Priorität: 22.07.1994 DE 4425899
(43) Veröffentlichungstag der Anmeldung: 28.02.1996
(73) Patentinhaber: Continental Aktiengesellschaft, 30165 Hannover (DE)
(72) Erfinder: Decker, Heinrich, D-30827 Garbsen (DE); Kuhlmann, Silvia, D-30451 Hannover (DE); Frühauf, Kai, D-30851 Langenhagen (DE); Rodewald, Helmut, D-31249 Rötzum (DE)

(56) Entgegenhaltungen:
- EP-A- 0 477 542
- DE-U- 8 620 979
- DE-U- 8 809 532
- DE-U- 8 809 991
- FR-A- 863 504
- US-A- 4 641 695

## Beschreibung

Die Erfindung bezieht sich auf einen Reifen (1) mit profilierter Lauffläche (2), die im wesentlichen S-förmige Querrillen (3) aufweist, wobei die Querrillen (3) in der Profildraufsicht im Rande (4) der Aufstandsfläche unter einem Winkel (β1) zwischen 65° und 90° zur Umfangsrichtung (U) verlaufen und an ihrer axial Innersten Stelle unter einem Winkel (β2) zwischen 30° und 50° zur Umfangsrichtung (U) verlaufen.

Reifen mit in der Draufsicht S-förmigen Querrillen sind bekannt. Sie bringen ohne Drehsinnbindung in Laufflächenmitte eine stärkere Umfangsorientierung der Negative als an den Laufflächenrändern. Dies ist vorteilhaft zur Wasserverdrängung, weil aus der Laufflächenmitte wegen zu langer Wege in der Axialen das Wasser besser in Umfangsrichtung als in Axialrichtung abführbar ist. Da in mitteleuropäischen Wintern besonders häufig nasse Straßen anzutreffen sind, ist für Winterreifen, wo die erfindungsgemäße Laufflächenprofilierung vorzugsweise eingesetzt wird, ein günstiges Aquaplaning-Verhalten wichtig.

Aus dem deutschen Geschmacksmuster DE-M 93 02 029 ist eine Laufflächenprofilierung bekannt, wo jede im übrigen knick- und versatzfrei von Laufflächenrand zu Laufflächenrand durchgeführte S-förmig gewölbte Querrille in der Laufflächenmitte durch je einen Endzipfel zweier etwa parallelogrammförmigen, sich mit seinen langen Kanten im wesentlichen in Umfangsrichtung erstreckenden Klotz (6) mitten in dem S-Linienzug (9) unterbrochen ist, wobei die kurzen Kanten dieser die Kontinuität der S-förmigen Querrillen unterbrechenden Klötze etwa senkrecht zu den S-förmigen Querrillen verlaufen.

Der Fachmann weiß, daß ununterbrochen durchgeführte S-förmige Querrillen wie Scharnierlinien wirken und zu unangenehmen Geräuschen Anlaß geben. Weiterhin scheinen Probleme ungleichmäßigen Mittenabriebes mit der zu schwingungswilligen Steifigkeitsverteilung einer solchen Konstruktion zusammen zu hängen. Deshalb sollen die S-förmigen Querrillen, wie an sich bekannt, etwa in ihrer Mitte unterbrochen sein.

Es stellt sich die Aufgabe, ohne Beeinträchtigung des Aquaplaning-Verhaltens die S-förmigen Querrillen mit Hinblick auf das Schwingungsverhalten wirkungsvoller zu unterbrechen als im Stand der Technik bekannt.

Die Aufgabe wird erfindungsgemäß dadurch gelöst, daß in gattungsmäßen Reifen jede im übrigen knick- und versatzfrei von Laufflächenrand (4) zu Laufflächenrand (4) durchgeführte S-förmig gewölbte Querrille (3) in der Laufflächenmitte (5) durch einen einzigen rechteckförmigen, sich mit seinen langen Kanten (7) im wesentlichen senkrecht zur Querrille (3) erstreckenden Klotz (6) mitten in dem S-Linienzug (9) unterbrochen ist, wobei die kurzen Kanten (8) dieser die Kontinuität der S-förmigen Querrillen (3) unterbrechenden Klötze (6) mit der in Umlaufrichtung vor bzw. hinter der jeweils betrachteten S-förmigen Querrille (3a bzw. 3b) in einer Flucht liegen.

Der unterbrechende Klotz ragt also nicht etwa nur mit einem kleinen Zipfel in die ansonsten kontinuierlich S-förmige Querrille herein, sondern er liegt mit seiner Klotzmitte mitten in der S-förmigen Querrille. Dies ist wesentlich, weil ein jeder Klotz in seiner Mitte sein Steifigkeitsmaximum hat, am Rande hingegen kaum noch eine Steifigkeit bietet. Die Steifigkeit der Unterbrechung der S-förmigen Querrillen ist ferner dadurch besonders hoch, daß jeweils nur ein einziger zur S-Rille quergestellter Klotz die Unterbrechung bewirkt.

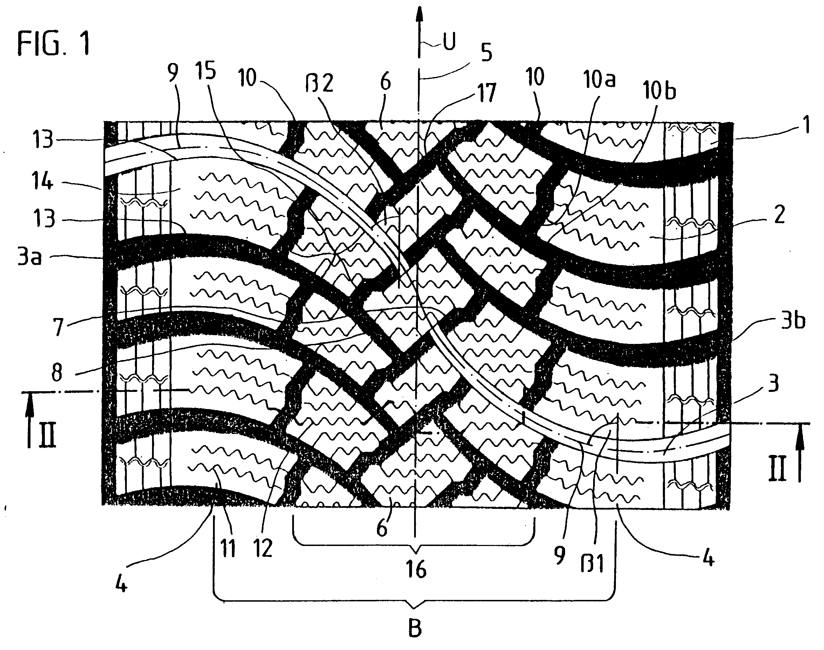

Da die Klötze in Laufflächenmitte aus Gründen des Geräusches und des Abriebes nicht zu groß werden dürfen, die Wahl großer Klotzgeometrien zur Bereitstellung großer Steifigkeit senkrecht zu den zu unterdrückenden "Scharnierlinien" (siehe Linie 9 in Figur 1) also nicht möglich ist, ist die optimale Gestaltung des Umrisses der in Laufflächenmitte plazierten, die S-förmigen Querrillen unterbrechenden Klötze wichtig: Zur Erreichung des Steifigkeitsmaximums sind die unterbrechenden Klötze im wesentlichen rechteckförmig gestaltet mit den langen Seiten etwa senkrecht zu der jeweils zu unterbrechenden S-förmigen Querrille.

Wichtig ist ferner der bündige Abschluß der unterbrechenden Klötze an seinen beiden kurzen Seiten in einer Flucht mit der voreilenden bzw. nacheilenden S-förmigen Querrille. Auf diese Weise sind die ununterbrochenen Teile der S-förmigen Querrillen sehr weit bis in die Laufflächenmitte gezogen, was die Entwässerung begünstigt.

Zur weiteren Verbesserung des Aquaplanig-Verhaltens ist vorzugsweise zu beiden Seiten der Laufflächenmitte (5) und zwar im Bereich zwischen 22% und 41% der Aufstandsflächenbreite (B) gemessen von der Laufflächenmitte (5) aus je eine zickzackförmige Umfangsrille (10) angeordnet, die im Zick-Schenkel (10a) etwa senkrecht zu den S-förmigen Querrillen (3) an dieser Stelle verläuft und im Zack-Schenkel (10b) mit den S-förmigen Querrillen (3) zusammenfällt, wobei die Aufstandsflächenbreite (B) bestimmt wird mit einer Last von 80% der maximalen Tragfähigkeit nach ETRTO unter einem Luftüberdruck von 85% desjenigen, der nach ETRTO der maximalen Tragfähigkeit zugeordnet ist auf einer Felge mit einer um einen halben Zoll größeren Maulweite als nach ETRTO für die betreffende Reifengröße vorgesehen.

Insbesondere zur Verbesserung des Griffes auf Schnee und Eis empfiehlt es sich ferner, wie an sich bekannt, die Laufflächedurch Einschnitte aufzuweichen. Es hat sich als besonders vorteilhaft herausgestellt, wenn die Einschnitte (11) in den Bereichen axial außerhalb der Längsrillen (10) parallel zu den längeren Kanten (13) der Positive (14) verlaufen, hingegen die Einschnitte (12) im Bereich axial innerhalb der Längsrillen (10) diagonal zu den Kanten (7, 8, 15) der Positive und zwar im wesentlichen quer zur Umfangsrichtung. Vorzugsweise sind die Einschnitte (11, 12) in an sich bekannter Weise gewellt.

Inzwischen werden Winterreifen auch von Fahrern verwendet, die häufig hohe Quer- und Längsbeschleunigungen aufbauen. Bei extremen Belastungen können Risse im Profilrillengrund entstehen, die in letzter Vollendung bis zum Klotzabriß führen können. Um diesen Gefahren vorzubeugen, ist vorzugsweise die Tiefe (t10) von einer Umfangsrille (10) oder den Umfangsrillen (10) kleiner als die Tiefe (t11, t12) der dieser Umfangsrille (10) bzw. diesen Umfangsrillen (10) benachbarten Einschnitte (11, 12) und/oder die Tiefe (t3) von einer Umfangsrille (3) oder den Umfangsrillen (3) ist kleiner als die Tiefe (t11, t12) der dieser Umfangsrille (3) bzw. diesen Umfangsrillen (3) benachbarten Einschnitte (11, 12).

Auf diese Weise wird die Konzentration der Spannungen im Profilrillengrund gemildert; die Tiefendifferenz zwischen den tieferen Einschnitten und den weniger tiefen Rillen ist vorzugsweise so gewählt, daß die Spannungskonzentration im Einschnittgrund mit der Spannungskonzentration im Rillengrund übereinstimmt. Dieses Differenzmaß kann der Fachmann für jedes beliebige Profil mit der heute geläufigen FEM-Berechnung schnell iterativ bestimmen.

Die Erfindung wird nachfolgend anhand zweier Figuren näher erläutert. Es zeigt:
- Fig. 1: die maßstabsgerechte Draufsicht auf einen erfindungsgemäßen Reifen und
- Fig. 2: einen Querschnitt durch den gleichen Reifen im gleichen Maßstab.

Figur 1 zeigt die maßstabsgerechte Draufsicht auf einen erfindungsgemäßen Reifen 1 mit einer profilierten Lauffläche 2. Generell sind hierin die Negative schwarz dargestellt und die Positive weiß. Nur eine beliebig herausgegriffene der S-förmigen Querrillen 3 ist nur mit schwarzen Körperkanten und ansonsten weiß dargestellt, um so exemplarisch anhand der jeweiligen Rillenmittellinie 9 die nur in der Laufflächenmitte 5 unterbrochene Kontinuität der S-förmigen Querrillen 3 zu zeigen; dazu ist diese Rillenmittellinie 9 im Bereich der die Kontinuität unterbrechenden, in Laufflächenmitte angeordneten Klötze 6 stetig differenzierbar ergänzt.

Die S-förmig geschwungenen Querrillen 3 verlaufen am Laufflächenrand 4 im wesentlichen axial; in dem maßstabsgerecht gezeigten, bevorzugten Ausführungsbeispiel besteht eine kleine Neigung von 8° zur Axialen und zwar gleich herum orientiert wie die Neigung im Laufflächenmittenbereich 16. Zur Umfangsrichtung U beträgt die Rillenneigung β1 also 82°.

Die S-förmig geschwungenen Querrillen 3 verlaufen an ihrer der Laufflächenmitte 5 nächsten Stelle am spitzesten zur Umfangsrichtung, nämlich im wesentlichen diagonal; in dem maßstabsgerecht gezeigten, bevorzugten Ausführungsbeispiel beträgt die Neigung β2 zur Umfangsrichtung U an dieser Stelle 37°.

Von entscheidender Bedeutung sind die in der Laufflächenmitte 5 angeordneten, im wesentlichen rechteckförmigen Klötze 6, deren lange Kanten 7 sich im wesentlichen senkrecht, das heißt in einem Winkel zwischen 65° und 115° zur stetigen Fortsetzung der Mittellinie 9 der jeweiligen Querrille 3, zur durch diesen Klotz 6 unterbrochenen Querrille 3 an dieser Stelle erstreckt. Mit ihrer Steifigkeit senkrecht zur Querrille 3 werden Schwingungen des Laufflächenmittenbereiches gemindert.

Die kurzen Kanten 8 der besagten Klötze 6 verlaufen in einer Flucht mit der entsprechenden Begrenzungskante der vor- oder nacheilenden S-förmigen Querrille 3a und der nach- bzw. voreilenden S-förmigen Querrille 3b.

Zur weiteren Verbesserung des Aquaplaning-Verhaltens ist an beiden Rändern des Laufflächenmittenbereiches 16 je eine Umfangsrille 10 angeordnet, die - wie hier dargestellt - vorzugsweise zickzackförmig gestaltet ist und zwar bevorzugt so, daß ihre Zick-Schenkel 10a etwa senkrecht zu den S-förmigen Querrillen 3 an dieser Stelle verlaufen und ihre Zack-Schenkel 10b mit den S-förmigen Querrillen 3 zusammenfallen. Gemessen von der Laufflächenmitte 5 aus befinden sich diese Umfangsrillen 10 im Bereich zwischen 25,5% und 37,5 % der Aufstandsflächenbreite B , wobei die Aufstandsflächenbreite B bestimmt wird mit einer Last von 80% der maximalen Tragfähigkeit nach ETRTO unter einem Luftüberdruck von 85% desjenigen, der nach ETRTO der maximalen Tragfähigkeit zugeordnet ist auf einer Felge mit einer um einen halben Zoll größeren Maulweite als nach ETRTO für die betreffende Reifengröße vorgesehen.

Die kurzen Rillen, an die langen Kanten 7 der Mittenklötze 6 angrenzen, sind mit dem Bezugszeichen 17 angesprochen. Sie stehen etwa senkrecht auf den axial inneren Enden der S-förmigen Querrillen 3.

Zur weiteren Verbesserung des Aquaplaning-Verhaltens sind die S-förmigen Querrillen 3 zu den axial äußeren Enden hin trompetenartig verbreitert.

Wie insbesondere für Winterreifen an sich bekannt - und in diesem Marktsegment wird die Erfindung bevorzugt verwendet - sollte die Lauffläche 2 durch Einschnitte 11, 12 aufgeweicht sein. Vorzugsweise verlaufen diese (12) im Laufflächenmittenbereich 16 im wesentlichen axial und damit diagonal zu den Kanten 7, 8 und 15 der betreffenden Positive bzw. Positivbereiche. Axial außerhalb davon verlaufen sie (11) vorzugsweise parallel zu den längeren Kanten 13 der axial außen gelegenen Positive 14 bzw. - beim Fehlen von Umfangsrillen 10 - der axial außen gelegenen Positivbereiche 14. Wie hier dargestellt, sind alle Einschnitte 11, 12 vorzugsweise gewellt.

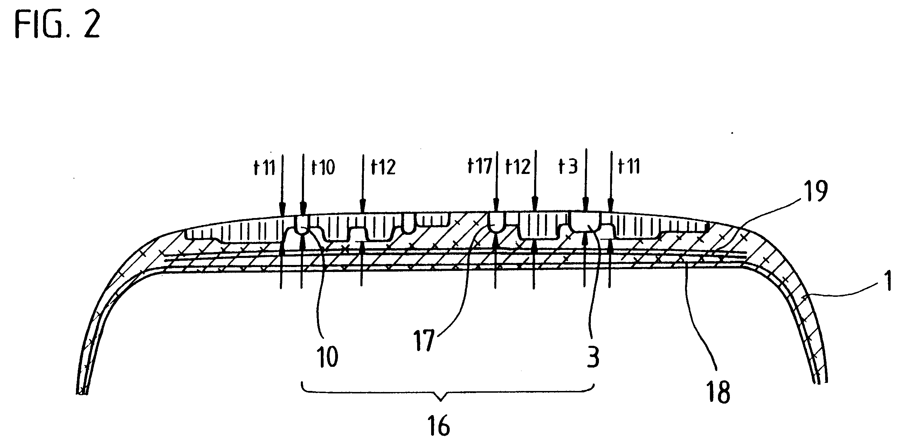

In dicker strichpunktierter Linie II ist ein im wesentlichen quer verlaufender Schnitt - kurz Querschnitt genannt - markiert. Der Schnittverlauf ist so gewählt, daß der sich dadurch ergebende und in Figur 2 gezeigte Querschnitt die Tiefe aller Einschnitte 11 und 12 und aller Rillen 3 , 10 und 17 zeigt.

Figur 2 zeigt den zuvor im Schnittverlauf erläuterten Querschnitt durch den gleichen Reifen 1 im gleichen Maßstab wie Figur 1. Die Tiefe t3, t10 und t17 der Rillen 3, 10 und 17 im Laufflächenmittenbereich 16 ist im wesentlichen konstant und kann im Neuzustand je nach Reifengröße zwischen 7,5 und 9,0 mm betragen. In den axial äußeren Bereichen nimmt die Rillentiefe t3 der S-förmigen Querrillen 3 ab.

Figur 2 zeigt ferner die Tiefe t11 und t12 der Einschnitte 11 und 12. Diese Tiefen t11 und t12 sind nicht über der gesamten axialen Breite des Reifens konstant, sondern der Grund eines jeden Einschnittes 11, 12 ist zur Verminderung der Kerbwirkung an seinen axial äußeren Enden angehoben. Bei Einschnitten großer Axialerstreckung (siehe in der linken Abbildungshälfte dort, wo t12 angetragen ist) ist vorzugsweise eine solche Grundanhebung auch etwa in Einschnittmitte angeordnet.

Gemäß einer Weiterbildung der Erfindung ist die maximale Tiefe t11, t12 aller Einschnitte 11, 12 um eine Differenz zwischen 0,5 und 1,0 mm größer als die Tiefen t3, t10 bzw. t17 der nächstliegenden Rille 3 oder 10 oder 17. Hierdurch werden insbesondere die ansonsten im Längsschnitt sichtbaren Spannungskonzentrationen im Grunde der Rillen 3, 10 und 17 gemindert.

Erfindungsgemäße Reifen sind vorzugsweise mit einer Radialkarkasse 18 und zwei Gürtellagen 19 ausgestattet.

## Patentansprüche

1. Reifen (1) mit profilierter Lauffläche (2), die im wesentlichen S-förmige Querrillen (3) aufweist, wobei die Querrillen (3) in der Profildraufsicht im Rande (4) der Aufstandsfläche unter einem Winkel (β1) zwischen 65° und 90° zur Umfangsrichtung (U) verlaufen, an ihrer axial innersten Stelle unter einem Winkel (β2) zwischen 30° und 50° zur Umfangsrichtung (U) verlaufen,
**dadurch gekennzeichnet,** daß jede im übrigen knick- und versatzfrei von Laufflächenrand (4) zu Laufflächenrand (4) daurchgeführte S-förmig gewölbte Querrille (3) in der Laufflächenmitte (5) durch einen einzigen rechteckförmigen, sich mit seinen langen Kanten (7) im wesentlichen senkrecht zur Querrille (3) erstreckenden Klotz (6) mitten in dem S-Linienzug (9) unterbrochen ist, wobei die nacheilende kurze Kante (8) eines jeden die Kontinuität einer S-förmigen Querrillen (3) unterbrechenden rechteckförmigen Klotzes (6) mit der nacheilenden S-förmigen Querrille (3a) in einer Flucht liegt und die voreilende kurze Kante (8) eines jeden die Kontinuität einer S-förmigen Querrillen (3) unterbrechenden rechteckförmigen Klotzes (6) mit der voreilenden S-förmigen Querrille (3b) in einer Flucht liegt.

2. Reifen (1) nach Anspruch 1 dadurch gekennzeichnet, daß zu beiden Seiten der Laufflächenmitte (5) und zwar im Bereich zwischen 22% und 41% der Aufstandsflächenbreite (B) gemessen von der Laufflächenmitte (5) aus je eine zickzackförmige Umfangsrille (10) angeordnet ist, die im Zick-Schenkel (10a) etwa senkrecht zu den S-förmigen Querrillen (3) an dieser Stelle verläuft und im Zack-Schenkel (10b) mit den S-förmigen Querrillen (3) zusammenfällt, wobei die Aufstandsflächenbreite (B) bestimmt wird mit einer Last von 80% der max. Tragfähigkeit nach ETRTO unter einem Luftüberdruck von 85% desjenigen, der nach ETRTO der maximalen Tragfähigkeit zugeordnet ist auf einer Felge mit einer um einen halben Zoll größeren Maulweite als nach ETRTO für die betreffende Reifengröße vorgesehen.

3. Reifen (1) nach Anspruch 2 dadurch gekennzeichnet, daß sein Laufflächenprofil (2) durch Einschnitte (11, 12) aufgeweicht ist, wobei die Einschnitte (11) in den Bereichen axial außerhalb der Längsrillen (10) parallel zu den längeren Kanten (13) der Positive (14) verlaufen, die Einschnitte (12) im Bereich axial innerhalb der Längsrillen (10) hingegen diagonal zu den Kanten (7, 8, 15) der Positive verlaufen und zwar im wesentlichen quer zur Umfangsrichtung.

4. Reifen (1) nach Anspruch 3 dadurch gekennzeichnet, daß die Einschnitte (11, 12) in an sich bekannter Weise gewellt sind.

5. Reifen (1) nach Anspruch 3 dadurch gekennzeichnet, daß die Tiefe (t10) von einer Umfangsrille (10) oder den Umfangsrillen (10) kleiner ist als die Tiefe (t11, t12) der dieser Umfangsrille (10) bzw. diesen Umfangsrillen (10) benachbarten Einschnitte (11, 12).

6. Reifen (1) nach Anspruch 3 dadurch gekennzeichnet, daß die Tiefe (t3) von einer Umfangsrille (3) oder den Umfangsrillen (3) kleiner ist als die Tiefe (t11, t12) der dieser Umfangsrille (3) bzw. diesen Umfangsrillen (3) benachbarten Einschnitte (11, 12).

## Claims

1. Tyre (1), having a profiled tread surface (2) which has substantially S-shaped transverse grooves (3), the transverse grooves (3) extending in the edge (4) of the contact surface at an angle (β1) between 65° and 90° relative to the circumferential direction (U), when the profile is viewed from above, and extending at an angle (β2) between 30° and 50° relative to the circumferential direction (U) at their axially innermost location, characterised in that each S-curved transverse groove (3), also extending from tread surface edge (4) to tread surface edge (4) in a bend-free and offset-free manner, is interrupted in the tread surface centre (5) by a single, rectangular block (6), which extends with its long edges (7) substantially perpendicular to the transverse groove (3), centrally in the S-line curve (9), the trailing short edge (8) of each rectangular block (6), which interrupts the continuity of an S-shaped transverse groove (3), being in alignment with the trailing S-shaped transverse groove (3a), and the leading short edge (8) of each rectangular block (6), which interrupts the continuity of an S-shaped transverse groove (3), being in alignment with the leading S-shaped transverse groove (3b).

2. Tyre (1) according to claim 1, characterised in that a zigzag-shaped circumferential groove (10) is disposed on each side of the tread surface centre (5), that is to say in the region between 22 % and 41 % of the contact surface width (B), measured from the tread surface centre (5), said circumferential groove extending in the zig-shaped portion (10a) substantially perpendicular to the S-shaped transverse grooves (3) at this location and coinciding with the S-shaped transverse grooves (3) in the zag-shaped portion (10b), the contact surface width (B) being determined with a load of 80 % of the max. bearing strength according to ETRTO below an excess air pressure of 85 % of the pressure which is associated with the maximum bearing strength according to ETRTO on a rim with a clearance width which is greater by half an inch than is envisaged for the pertinent tyre size according to ETRTO.

3. Tyre (1) according to claim 2, characterised in that its tread surface profile (2) is softened by incisions (11, 12), the incisions (11, 12) in the regions axially externally of the longitudinal grooves (10) extending parallel to the longer edges (13) of the positive (14), but the incisions (12) in the region axially internally of the longitudinal grooves (10) extending diagonally relative to the edges (7, 8, 15) of the positive, that is to say substantially transversely relative to the circumferential direction.

4. Tyre (1) according to claim 3, characterised in that the incisions (11, 12) are undulatory in a manner known per se.

5. Tyre (1) according to claim 3, characterised in that the depth (t10) of one circumferential groove (10) or of the circumferential grooves (10) is smaller than the depth (t11, t12) of the incisions (11, 12) adjacent this circumferential groove (10) or respectively these circumferential grooves (10).

6. Tyre (1) according to claim 3, characterised in that the depth (t3) of one circumferential groove (3) or of the circumferential grooves (3) is smaller than the depth (t11, t12) of the incisions (11, 12) adjacent this circumferential groove (3) or respectively these circumferential grooves (3).

## Revendications

1. Bandage pneumatique (1) comportant une bande roulement profilée (2) qui présente des cannelures transversales (3) sensiblement en forme de S, les cannelures transversales (3) étant, en vue de dessus du profil, en bordure (4) de la surface d'appui au sol, orientées sous un angle (β1) valant entre 65° et 90) par rapport à la direction périphérique (U), et, à leur position axialement la plus intérieure, orientées sous un angle (β2) valant entre 30° et 50° par rapport à la direction périphérique (U),
caractérisé par le fait que chaque cannelure transversale (3), ondulée en forme de S et, pour le reste, réalisée sans brisure ni déport de la bordure (4) de la surface de roulement à la bordure (4) de la surface de roulement, est interrompue, dans le milieu (5) de la surface de roulement, au milieu de la courbe en S (9), par une unique bloc (6) de forme rectangulaire qui, par ses grands côtés, (7), s'étend sensiblement perpendiculairement à la cannelure transversale (3), le petite côté (8), qui vient derrière, de chaque bloc rectangulaire (6) qui interrompt la continuité d'une cannelure transversale en forme de S (3) affleurant la cannelure transversale en forme de S (3a) qui vient derrière et le petit côté (8), qui vient devant, de chaque bloc rectangulaire (6) qui interrompt la continuité d'une cannelure transversale en forme de S (3) affleurant la cannelure transversale en forme de S (3b) qui vient devant.

2. Bandage pneumatique selon la revendication 1, caractérisé par le fait que, des deux côtés du milieu (5) de la surface de roulement et de façon plus précise dans la zone située entre 22% et 41% de la largeur (B) de la surface d'appui au sol, mesuré depuis le milieu (5) de la surface du roulement, est chaque fois disposés une cannelure périphérique (10) en forme de zigzag qui, sur la branche zig (10a), est, en cette position, orientée à peu près perpendiculairement aux cannelures transversales en forme de S (3) et, sur la branche zag (10b), coïncide avec les cannelures transversales en forme de S (3), la largeur (B) de la surface d'appui au sol étant déterminée avec une charge de 80% de la capacité maximale de charge selon ETRTO, Organisation Technique Européenne pour les jantes de pneumatique, sous une surpression d'air de 80% de celle qui, selon ETRTO, correspond à la capacité maximale de charge sur une jante d'une ouverture plus grande, de 12,7 mm (un demi pouce) que prévu selon ETRTO pour la dimension de pneumatique correspondante.

3. Bandage pneumatique (1) selon la revendication 2, caractérisé par le fait que son profil (2) de surface de roulement est adouci par des incisions (12), les incisions (11) existant dans les zones situées axialement à l'extérieur des cannelures longitudinales (10) étant orientées parallèlement au plus grand côté (13) des reliefs (14), les incisions (12) existant dans la zone située axialement à l'intérieur des cannelures longitudinales (10) étant par contre orientées diagonalement par rapport au bord (7, 8, 15) des reliefs et de façon plus pratique, sensiblement perpendiculairement à la direction périphérique.

4. Bandage pneumatique (1) selon la revendication 3, caractérisé par le fait que les incisions (11, 12) sont ondulées d'une façon connue en soi.

5. Bandage pneumatique (1) selon la revendication 3, caractérisé par le fait que la profondeur (t10) d'une cannelure périphérique (10) ou des cannelures périphériques est inférieure à la profondeur (t11, t12) des incisions (11, 12) voisines de cette cannelure périphérique (10) ou de ces cannelures périphériques (10).

6. Bandage pneumatique (1) selon la revendication 3, caractérisé par le fait que la profondeur (t3) d'une cannelure périphérique (3) ou des cannelures périphériques (3) est inférieure à la profondeur (t11, t 12) des incisions voisines de cette cannelure périphérique (3) ou de ces cannelures périphériques (3).
